# EUROPÄISCHE PATENTANMELDUNG

(11) **EP 1 560 244 A2**
(43) Veröffentlichungstag der Anmeldung: **03.08.2005**
(21) Anmeldenummer: 05100116.2
(22) Anmeldetag: 11.01.2005
(51) Int. Cl.: H01H 71/28, H01H 83/20, H02H 1/06

(54) **Schutzschalter mit elektronischen Auslösemitteln**

(30) Priorität: 31.01.2004 DE 102004004958
(71) Anmelder: Moeller GmbH, 53115 Bonn (DE)
(72) Erfinder: Gauxmann, Berthold, 53225, Bonn (DE)

(57) **Zusammenfassung**

Die Erfindung betrifft einen elektronische Auslösemittel enthaltenden Schutzschalter. Mit Hauptstromschienen (8) verbundene Stromwandler (14) sind sekundärseitig über eine Gleichrichterschaltung (16) mit den elektronischen Auslösemitteln (28) verbunden, die beim Auftreten von Überströmen eine erste Erregerwicklung (20) eines Auslösemagneten (18) bestromen, der über einen Schaltmechanismus (12) zum Öffnen von Hauptkontakten (10) verbunden ist. Eine von der Gleichrichterschaltung (16) gespeiste Stromversorgungsschaltung (24) versorgt die elektronischen Auslösemittel (28) und den Auslösemagneten (18). Das zu lösende Problem besteht in einer Aufwandsenkung für die Kurzschlussschnellstauslösung. Dazu weist der Auslösemagnet (18) eine zweite Erregerwicklung (22) auf, die im dem die Gleichrichterschaltung (16) mit der Stromversorgungsschaltung (24) verbindenden Stromweg angeordnet ist und die gegenüber der ersten Erregerwicklung (20) deutlich weniger Windungen sowie einen deutlich höheren Drahtquerschnitt aufweist.

## Beschreibung

Die Erfindung betrifft einen elektronische Auslösemittel enthaltenden Schutzschalter, insbesondere Leistungsschalter oder Motorschutzschalter, nach dem Oberbegriff von Anspruch 1.

Aus der Druckschrift DE 197 12 548 A1 (Fig. 3) ist ein derartiger Schutzschalter bekannt, der elektronische Auslösemittel enthält. Der über die Hauptkontakte des mehrpoligen Schutzschalters fließende Mehrphasenstrom wird von Stromwandlern erfasst und über eine Gleichrichterschaltung den elektronischen Auslösemitteln zugeführt, die StromSpannungswandler, eine Auslöseschaltung und eine Triggerschaltung enthalten. Die Auslöseschaltung überwacht den Mehrphasenstrom und aktiviert bei Feststellung eines Überstromes nach einer mit der Höhe des Überstromes abnehmender Verzögerung einen elektrischen Auslösemagneten. Der Auslösemagnet öffnet dann seinerseits über einen Schaltmechanismus die Hauptkontakte. Die elektronischen Auslösemittel und der Auslösemagnet werden von einer Stromversorgungsschaltung und diese wiederum von der Gleichrichterschaltung mit Energie gespeist. Nachteilig ist, dass beim Auftreten sehr hoher Kurzschlussströme durch die Eigenverzögerung der elektronischen Mittel und durch die Induktivität des Auslösemagneten bedingte Eigenverzögerungszeiten nicht ausgeschaltet werden können.

Aus der DE 202 14 922 U1 ist ein Leistungsschalter bekannt, der sowohl elektronische Auslösemittel als auch elektromagnetische Kurzschlussschnellstauslöser enthält. Jeder Kurzschlussschnellstauslöser enthält einen Klappanker, der schwenkbar an einer zum jeweiligen Hauptkontakt führenden Hauptstromschiene gelagert, mit dieser elektromagnetisch gekoppelt und von dieser in Ruhestellung unter dem Einfluss eines Federmittels abgeschwenkt ist. Eine von jedem Klappanker abstehende Auslösezunge steht durch einen Führungsschlitz der Hauptstromschiene reichend mit einem Schaltmechanismus in Wirkverbindung. Diese Lösung ist allerdings sehr kostenintensiv durch den zu betreibenden Material- und Fertigungsaufwand für die Kurzschlussschnellstauslöser. Außerdem beanspruchen die Kurzschlussschnellstauslöser zusätzlichen Bauraum.

Der Erfindung liegt daher die Aufgabe zugrunde, den Aufwand für die Kurzschlussschnellstauslösung zu verringern.

Ausgehend von einem Schutzschalter der eingangs genannten Art wird die Aufgabe erfindungsgemäß durch die Merkmale des unabhängigen Anspruches gelöst. Der Auslösemagnet weist eine mit den elektronischen Auslösemitteln verbundene erste Erregerwicklung und eine im Stromweg zwischen der Gleichrichterschaltung mit der Stromversorgungsschaltung angeordnete zweite Erregerwicklung auf. Der Strom durch die zweite Erregerwicklung stellt damit ein nahezu unverzögertes und annähernd proportionales Abbild des Stromes über die Hauptstromschienen sowie Hauptkontakte dar. Durch die deutlich geringere Windungszahl der zweiten Erregerwicklung gegenüber der Windungszahl der ersten Erregerwicklung spricht der Auslösemagnet erst bei außerordentlich hohem Strom an. Die geringe Windungszahl bewirkt weiterhin, dass die zweite Erregerwicklung eine geringe Induktivität aufweist und damit der Auslösemagnet beim Auftreten eines hohen Kurzschlussstroms über den Hauptkontakten nahezu unverzögert anspricht. Durch den hohen Drahtquerschnitt der zweiten Erregerwicklung sind der unter Nennstrombedingungen oder bei mäßig hohen Überströmen über der zweiten Erregerwicklung auftretende Spannungsabfall bzw. Energieverbrauch praktisch ohne Einfluss auf das Arbeitsverhalten der elektronischen Auslösemittel.

Eine zweckmäßige Ausgestaltung der Erfindung besteht darin, dass durch die Bemessung des Windungszahlverhältnisses zwischen erster und zweiter Erregerwicklung der Strom durch die zweite Erregerwicklung erst bei sehr hohen Kurzschlussströmen durch die Hauptstromschienen die zum Ansprechen des Auslösemagneten erforderliche Höhe erreicht, vorzugsweise wenn der Strom über die Hauptkontakte durch Erreichen der sogenannten Abhebegrenze die Hauptkontakte elektrodynamisch zu öffnen beginnt.

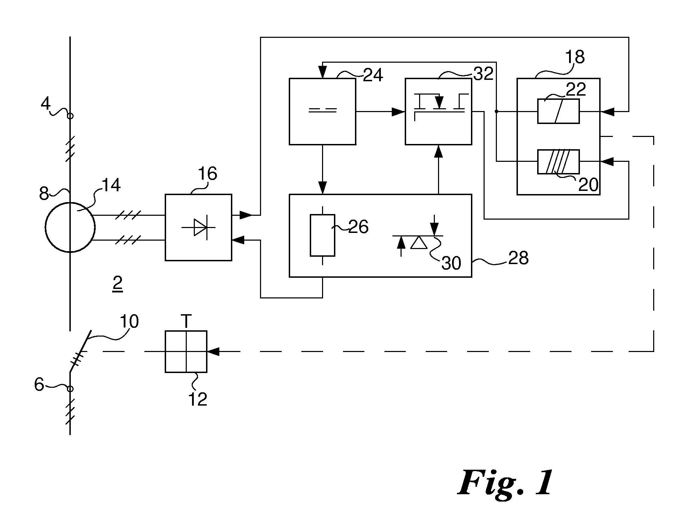

Weitere Einzelheiten und Vorteile der Erfindung ergeben sich aus dem folgenden, anhand der Figur 1 erläuterten Ausführungsbeispiel.

Zwischen einer Hauptstromeinspeisung und einer zu versorgenden elektrischen Anlage ist ein als dreipoliger Leistungsschalter ausgebildeter Schutzschalter 2 angeordnet. Der Schutzschalter 2 enthält in üblicher Weise zwischen einspeiseseitigen und lastseitigen Anschlussklemmen 4 bzw. 6 angeordnete Hauptstromschienen 8 und Hauptkontakte 10, die über einen hand- oder fernbetätigbaren Schaltmechanismus 12 geschlossen und geöffnet werden. Mit den Hauptstromschienen 8 sind Stromwandler 14 gekoppelt. Die Stromwandler 14 sind sekundärseitig mit einer Gleichrichterschaltung 16 verbunden. Der von der Gleichrichterschaltung 16 gelieferte Gleichstrom wird im Wesentlichen über eine zweite Erregerwicklung 22 eines Auslösemagneten 18, eine Stromversorgungsschaltung 24 und einen elektronischen Auslösemitteln 28 zugeordneten Messwiderstand 26 geleitet. Der Auslösemagnet 18 weist weiterhin eine erste Erregerwicklung 20 auf und ist mechanisch mit dem Schaltmechanismus 12 verbunden. Die Auslösemittel 28 beinhalten weiterhin elektronische Bewertungsmittel 30. Durch die Bewertungsmittel 30 erfolgt laufend eine Abfrage der am Messwiderstand 26 anstehenden Messspannung, die ein Maß für den über die Hauptstromschienen 8 und die Hauptkontakte 10 fließenden Hauptstrom ist. Beim Überschreiten vorgegebener Grenzbedingungen durch den Hauptstrom bzw. durch den von der Gleichrichterschaltung 16 gelieferten Gleichstrom geben die Bewertungsmittel 30 ein Triggersignal zum Schließen eines Halbleiterschalters 32 aus. Durch Schließen des Halbleiterschalters 32 wird die erste Erregerwicklung 20 mit elektrischer Energie aus dem Stromversorgungsschaltung 24 versorgt, worauf der Auslösemagnet 18 anspricht und durch Auslösen des Schaltmechanismus 12 das Öffnen der Hauptkontakte 10 bewirkt.

Die erste Erregerwicklung 20 ist mit einer ausreichend hohen Windungszahl ausgelegt, sodass zum Ansprechen des Auslösemagneten 18 eine ausreichende Energiemenge von der Stromversorgungsschaltung 24 zur Verfügung gestellt werden kann. Die zweite Erregerwicklung 22 ist demgegenüber mit einer bedeutend geringeren Windungszahl ausgelegt. Damit reicht ein über die zweite Erregerwicklung 22 fließender Strom mit einem Stromwert, der höchstens durch die Hauptstromschienen 8 fließenden mäßigen Überströmen entspricht, nicht aus, den Auslösemagneten 18 zu aktivieren. In diesen Fällen erfolgt das Ansprechen des Auslösemagneten 18 durch die über die Auslösemittel 28 ausgelöste Bestromung der ersten Erregerwicklung 20. Die zweite Erregerwicklung 20 ist außerdem mit einem relativ großen Drahtquerschnitt versehen, sodass im Nennstrom- und im mäßigen Überstrombereich kein wesentlicher Spannungsverlust über der Erregerwicklung 20 entsteht. Das Ansprechen des Auslösemagneten 18 über die elektronischen Auslösemittel 28 und die erste Erregerwicklung 20 erfolgt mit einer Verzögerung, die mit Zunahme des Überstromes abnimmt. Bei weiter zunehmenden Überströmen erreicht diese Ansprechverzögerung einen nicht mehr unterschreitbaren Grenzwert, der hauptsächlich in Eigenverzögerungen der elektronischen Bauelemente der Auslösemittel 28 und in der Induktivität der ersten Erregerwicklung 20 begründet ist. Bei sehr hohen Überströmen, insbesondere wenn hohe Kurzschlussströme über die Hauptkontakte 10 fließen, ist der Strom durch die zweite Erregerwicklung 22 jedoch so hoch, dass dieser Strom unmittelbar das Ansprechen des Auslösemagneten 18 und damit über die mechanische Kopplung mit dem Schaltmechanismus 12 das schnellstmögliche Öffnen der Hauptkontakte 10 bewirkt. Hierbei ist von Nutzen, dass die zweite Erregerwicklung 22 durch ihre geringe Windungszahl von beispielsweise eins bis drei Windungen eine sehr geringe Induktivität aufweist, die eine kaum merkliche Ansprechverzögerung des Auslösemagneten 18 zur Folge hat. Um Beschädigungen bei derartig hohen Ansprechströmen vorzubeugen, sind spannungsempfindliche Bauelemente der Stromversorgungsschaltung 24 und der Auslösemittel 28 durch spannungsbegrenzende Mittel, beispielsweise Varistoren, geschützt. Im Übrigen üben die Sättigungseigenschaft der Stromwandler 14 und der Messwiderstand 26 eine strombegrenzende Wirkung aus.

## Patentansprüche

1. Schutzschalter mit elektronischen Auslösemitteln, wobei mit Hauptstromschienen (8) verbundene Stromwandler (14) sekundärseitig über eine Gleichrichterschaltung (16) mit den elektronischen Auslösemitteln (28) verbunden sind, die elektronischen Auslösemittel (28) beim Auftreten von Überströmen durch die Hauptstromschienen (8) eine erste Erregerwicklung (20) eines Auslösemagneten (18) bestromen, der Auslösemagnet (18) über einen Schaltmechanismus (12) zum Öffnen von Hauptkontakten (10) wirkverbunden ist und eine von der Gleichrichterschaltung (16) gespeiste Stromversorgungsschaltung (24) die elektronischen Auslösemittel (28) und den Auslösemagneten (18) elektrisch versorgt, **dadurch gekennzeichnet, dass**
― der Auslösemagnet (18) eine zweite Erregerwicklung (22) aufweist,
― die zweite Erregerwicklung im dem die Gleichrichterschaltung (16) mit der Stromversorgungsschaltung (24) verbindenden Stromweg angeordnet ist und
― die zweite Erregerwicklung (22) gegenüber der ersten Erregerwicklung (20) deutlich weniger Windungen sowie einen deutlich höheren Drahtquerschnitt aufweist.

2. Schutzschalter nach vorstehendem Anspruch, **dadurch gekennzeichnet, dass** durch die Wahl des Verhältnisses zwischen den Windungszahlen der ersten und der zweiten Erregerwicklung (20; 22) der Auslösemagnet (18) ausschließlich bei in den Hauptstromschienen (8) auftretenden erhöhten Kurzschlussströmen über die zweite Erregerwicklung (22) anspricht.

3. Schutzschalter nach vorstehendem Anspruch, **gekennzeichnet durch** Bemessung der Windungszahl der zweiten Erregerwicklung (22) in der Weise, dass der Auslösemagnet (18) bei einem Strom **durch** die Hauptstromschienen (8) anspricht, welcher der elektrodynamischen Abhebegrenze der Hauptkontakte (10) entspricht
